# EUROPEAN PATENT APPLICATION

(11) **EP 2 902 693 A1**
(43) Date of publication of application: **05.08.2015**
(21) Application number: 15152429.5
(22) Date of filing: 26.01.2015
(51) Int. Cl.: F21K 99/00, G02B 6/00, F21V 17/12, F21V 19/00, F21V 21/04, F21V 23/00, F21V 8/00, F21Y 101/02, F21Y 113/00

(54) **Led decorative lighting**

(30) Priority: 29.01.2014 TW 103202077
(71) Applicant: Hsu, Hsiu-Yu, Taipei City 11286 (TW)
(72) Inventor: Tzeng, Jiun-chau, 11286 Beitou District, Taipei City (TW)
(74) Representative: 2K Patentanwälte Blasberg Kewitz & Reichel

(57) **Abstract**

A LED decorative lighting (1, 1a', 1b') is provided. A lamp holder (10, 10a', 10b') has a case (11, 11a', 11b'). The light guide module (20, 20a', 20b') includes a stand (21) connected to the case (11, 11a', 11b') and an outer light pipe (22, 22a∼22e) as well as a central light pipe (23, 23a∼23e). The outer light pipe (22, 22a∼22e) is a hollow cylinder and surrounds an inner space (220), and the central light pipe (23, 23a∼23e) is in the inner space (220). A light module (30, 30a', 30b') is disposed in the case (11, 11a', 11b'). The light module (30, 30a', 30b') includes a LED substrate (31, 31b') and multiple LED chips (32) disposed on the LED substrate (31, 31b'). The LED chips (32) include at least one outer LED chip (321) arranged correspondingly to the outer light pipe (22, 22a∼22e) and at least one central LED chip (322, 322a) arranged correspondingly to the central light pipe (23, 23a∼23e). Thereby, the illumination angle and the illumination area are increased.

## Description

### Technical Field

The disclosure relates to a lighting, more particularly to a LED decorative lighting having multiple light pipes.

### Background

The advantages of LED (Light Emitting Diode) includes low energy consumption, long life, small size and fast response time so it gradually replaces the old tungsten lights, fluorescent lightings or mercury lightings and is widely used in lighting. Moreover, nowadays LEDs can perform a wide range of colors (e.g. red, green and blue). Since a simple switch and the current adjustment may mix lights to produce light of various colors, LED is used in most decorative lighting.

Expanding masks are usually used in LED lights for uniform illumination. Additionally, dimming application of it includes dimming the whole lighting. Due to the expanding masks, the LED light appears dim. Moreover, LED is plane point light so its light beam is centralized and is strong directional. This means it is focused and emits mostly towards the front side. Generally, the strongest light exists along the direction of the front side while the light intensity decreases as the angle increases.

Hence, applying LEDs on the decorative lighting leads to a problem of limited illumination angle and illumination area, which makes the lighting effects poor.

The disclosure intends to introduce a better design to solve the aforementioned problems.

### SUMMARY

One goal of the disclosure is to provide a LED decorative lighting in which the light from its light module is transferred via a light guide module, thereby increasing the illumination angle as well as the illumination area.

A LED decorative lighting comprises a lamp holder, a light guide module and a light module. The lamp holder has a case. The light guide module comprises a stand connected to the case and an outer light pipe as well as a central light pipe which are disposed on the stand. The outer light pipe is a hollow cylinder and surrounds an inner space and the central light pipe is in the inner space. The light module is disposed in the case. The light module comprises a LED substrate and a plurality of LED chips disposed on the LED substrate. The LED chips comprise at least one outer LED chip arranged correspondingly to the outer light pipe and at least one central LED chip arranged correspondingly to the central light pipe.

Compared to prior art, the light guide module is disposed in the LED decorative lighting of the disclosure and comprises the concentric outer light pipe and central light pipe. Additionally, the light module comprises the outer LED chip arranged correspondingly to the outer light pipe and the central LED chip arranged correspondingly to the central light pipe. The LED decorative lighting may generate lighting effects with different colors and levels of darkness by controlling the outer LED chip and the central LED chip (actions of switch and brightness). Besides, the light from the light module is transferred via a light guide module, thereby increasing the illumination angle as well as the illumination area. This improves the problem of poor lighting effects occurred in traditional LED decorative lightings.

### BRIEF DESCRIPTION OF THE DRAWINGS

The disclosure will become more fully understood from the detailed description and the drawings given herein below for illustration only and thus does not limit the disclosure, wherein:
FIG. 1 is a perspective view of a LED decorative lighting according to the first embodiment of the disclosure;
FIG. 2 is an exploded view of the LED decorative lighting according to the first embodiment of the disclosure;
FIG. 3 is a sectional view of the LED decorative lighting;
FIG. 4 is a top view of the LED decorative lighting;
FIG. 5 shows the LED decorative lighting of the second example of the first embodiment of the disclosure;
FIG. 6 shows the LED decorative lighting of the third example of the first embodiment of the disclosure;
FIG. 7 shows the LED decorative lighting of the fourth example of the first embodiment of the disclosure;
FIG. 8 shows the LED decorative lighting of the fifth example of the first embodiment of the disclosure;
FIG. 9 shows the LED decorative lighting of the sixth example of the first embodiment of the disclosure;
FIG. 10 is a sectional view of a LED decorative lighting according to the second embodiment of the disclosure; and
FIG. 11 is a sectional view of a LED decorative lighting according to the third embodiment of the disclosure.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

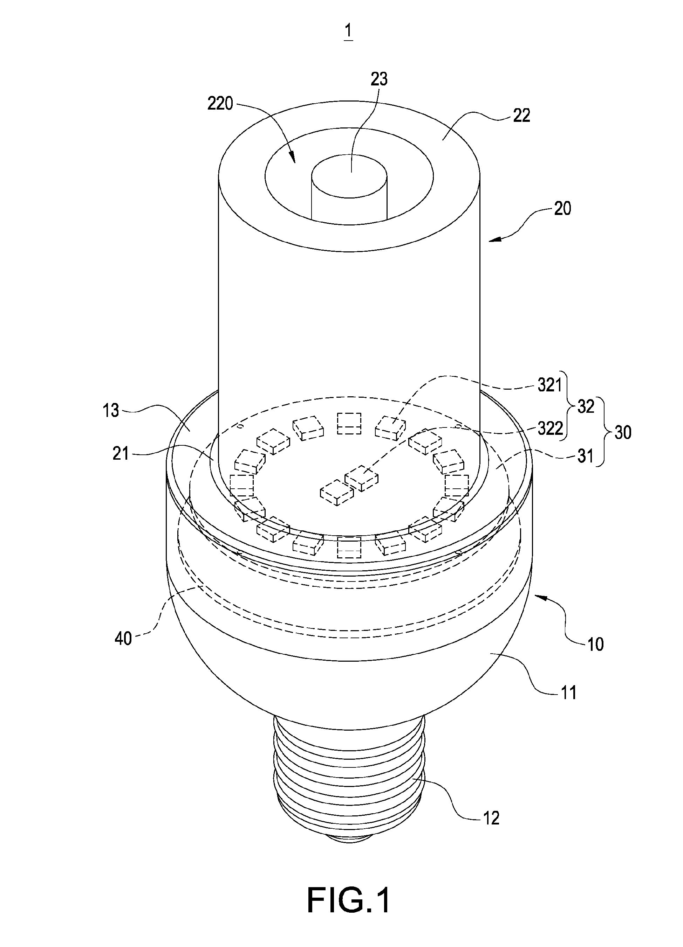

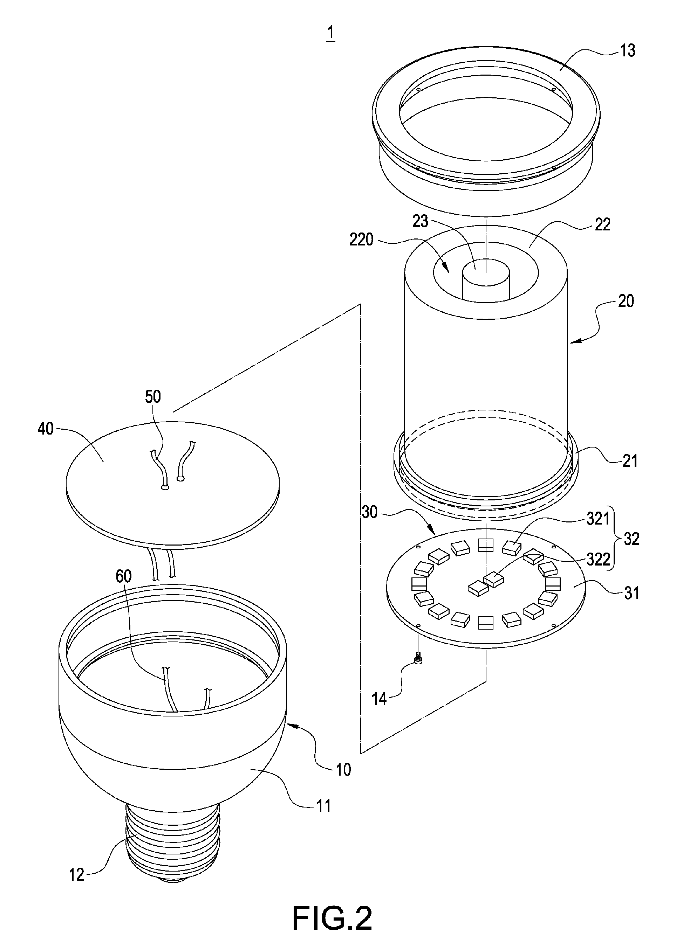

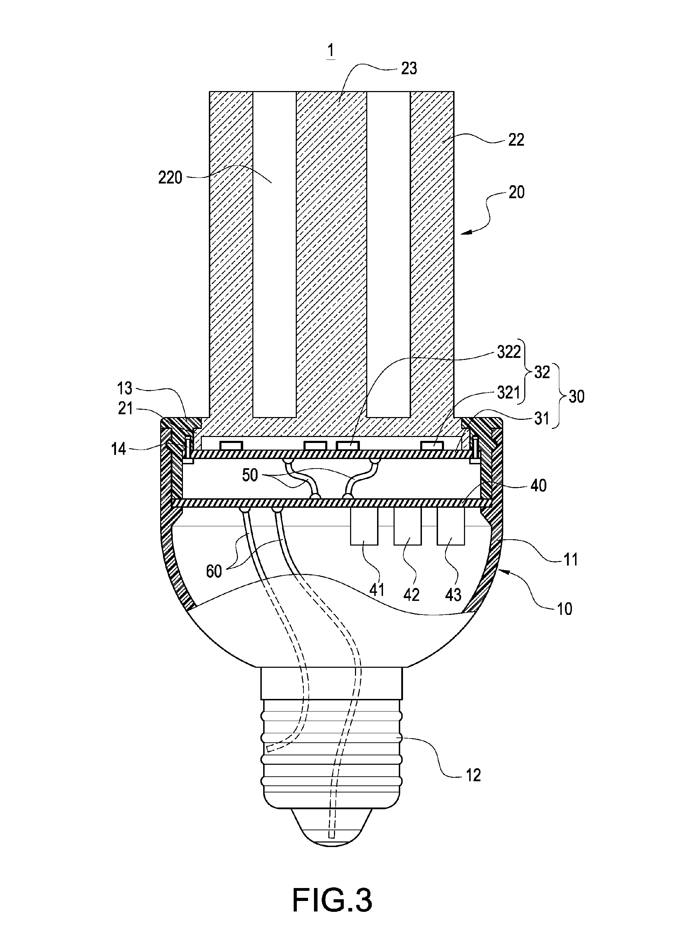

FIG. 1 to FIG. 4 are a perspective view, an exploded view, a sectional view and a top view of a LED decorative lighting respectively. Referring to FIG. 1 to FIG. 4, the LED decorative lighting 1 comprises a lamp holder 10, a light guide module 20 and a light module 30. The light module 30 is disposed inside the lamp holder 10. The light guide module 20 is arranged correspondingly to the light module 30 and is connected to the lamp holder 10. Thereby, the light generated from the light module 30 is transferred via the light guide module 20 for increasing the illumination angle as well as the illumination area.

The lamp holder has a case 11. The light guide module 20 comprises a stand 21 disposed on the case 11, an outer light pipe 22 disposed on the stand 21 and a central light pipe 23. The outer light pipe 22 is a hollow cylinder and surrounds an inner space 220. The central light pipe 23 is inside the inner space 220. In this embodiment, the stand 21, the outer light pipe 22 and the central light pipe 23 are integrally formed, but the disclosure is not limited thereto.

The light module 30 is put in the case 11 and comprises a LED substrate 31 and a plurality of LED chips 32 disposed on the LED substrate 31. The LED chips 32 comprise at least one outer LED chip 321 arranged correspondingly to the outer light pipe 22 and at least one central LED chip 322 arranged correspondingly to the central light pipe 23. The outer LED chip 321 and the central LED chip 322 may be in different colors based on requirements.

In one embodiment, the LED decorative lighting 1 further comprises a circuit board 40, a pair of connection wires 50 and a power line 60. The circuit board 40 is disposed in the case 11 while it is relative to the LED substrate 31 and is located on a lateral side away from the LED substrate 31. The circuit board 40 is electrically connected to the LED substrate 31 and further comprises a first power component 41, a second power component 42 and a switch component 43 controlling the first power component 41 and the second power component 42. The first power component 41 is electrically connected to the at least one outer LED chip 321 and is configured for controlling the current magnitude provided for the outer LED chip 321. The second power component 42 is electrically connected to the at least one central LED chip 322 and is configured for controlling the current magnitude provided for the central LED chip 322. As a result, the LED decorative lighting 1 may generate lighting effects with different colors and levels of darkness by controlling the first power component 41, the second power component 42 and the switch component 43.

The lamp holder 10 further comprises a lamp cap 12 connected to the case 11. Two ends of the pair of connection wires 50 are connected to the LED substrate 31 and the circuit board 40 respectively. Two ends of the pair of power lines 60 are connected to the circuit board 40 and the lamp cap 12 respectively. That is, the LED substrate 31 and the circuit board 40 are electrically connected with each other via the pair of connection wires 50. The circuit board, on the other hand, is electrically connected to the lamp cap 12 via the pair of power lines 60. When the lamp cap 12 and an external power source are connected, the electricity of the external power source may be transferred to the LED substrate 31, thereby making the LED chips 32 glow.

Preferably, the case 11 further comprises a cover 13 and a plurality of screwing members 14. The cover surrounds a peripheral edge of the stand 21 so the stand 21 is unable to drop from one side of the cover 13. Besides, the screwing members 14 go through the LED substrate 31 and are locked on the cover 13 so that the LED substrate 31 is fixed to the cover 13 of the case 11. Thereby, the other side of the stand 21 is blocked by the LED substrate 31, which prevents it from separating. Besides, the light guide module 20 is therefore fixed to the top edge of the case 11. The detail of the structure of the light guide module 20 and the light module 30 will be explained later.

In this embodiment, the number of the outer LED chips 321 and the number of the central LED chips 322 are plural. The outer light pipe 22 is an annular stick while the central light pipe 23 is a solid circular stick. The outer LED chips 321 are disposed on the bottom surface of the outer light pipe 22 at intervals, while the central LED chips are disposed on the bottom surface of the central light pipe 23 at intervals. Hence, the light from the outer LED chips 321 is transferred via the outer light pipe 22 and then goes out while the light from the central LED chips 322 is transferred via the central light pipe 23 and then goes out.

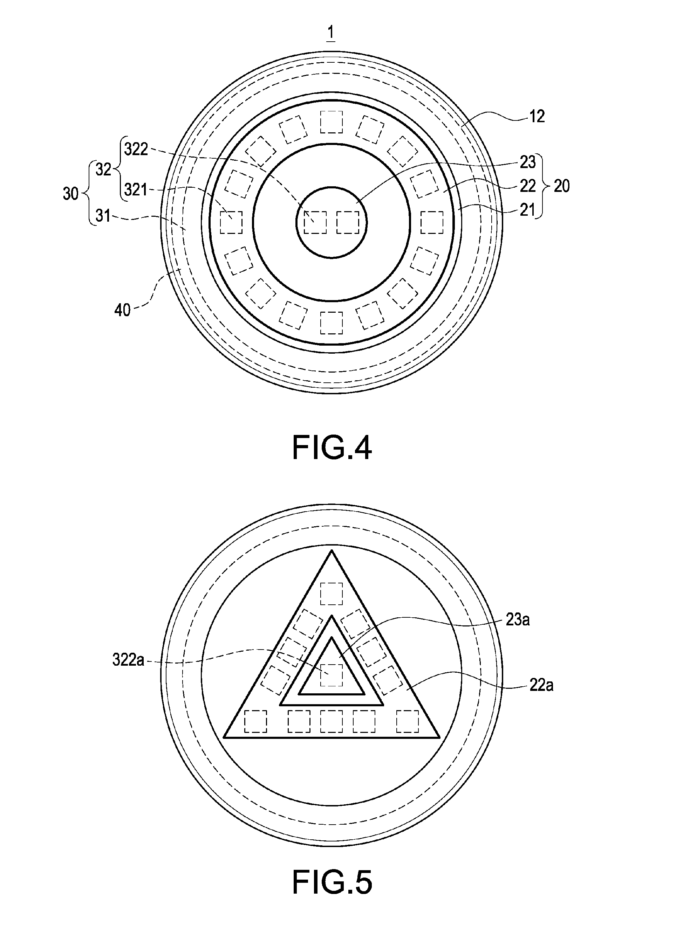

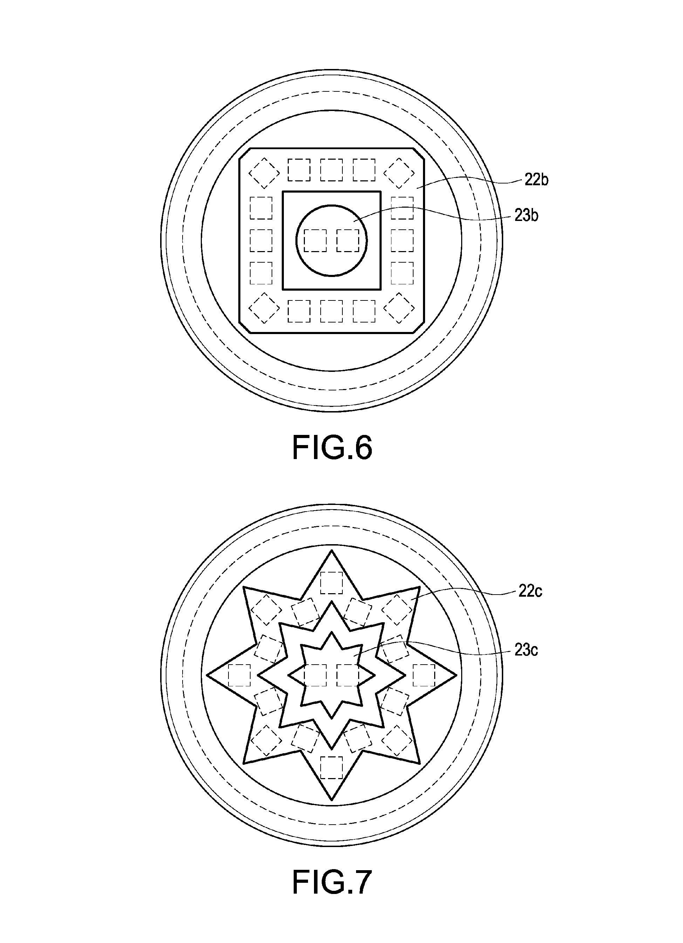

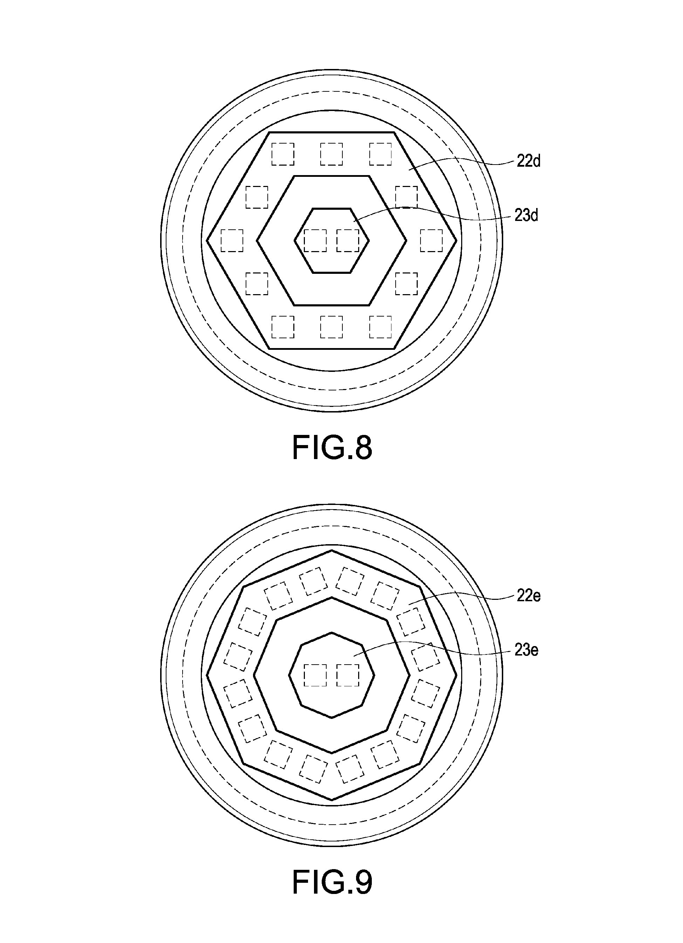

FIG. 5 to FIG. 9 shows other examples of LED decorative lightings of the disclosure. Referring to FIG. 5 to FIG. 9, the shapes of LED decorative lightings of these examples are different from that of the previous example. In FIG. 5, the outer light pipe 22a is a hollow triangular stick while the central light pipe 23a is a solid triangular stick. Besides, only one central LED chip 322a is disposed on the bottom surface of the central light pipe 23a. In FIG. 6, the outer light pipe 22b is a hollow square stick while the central light pipe 23a is a solid circular stick. In FIG. 7, the outer light pipe 22c is a hollow star stick while the central light pipe 23c is a solid star stick. In FIG. 8, the outer light pipe 22d is a hollow hexagonal stick while the central light pipe 23d is a solid hexagonal stick. In FIG. 9, the outer light pipe 22e is a hollow regular polygonal stick while the central light pipe 23e is a solid regular polygonal stick.

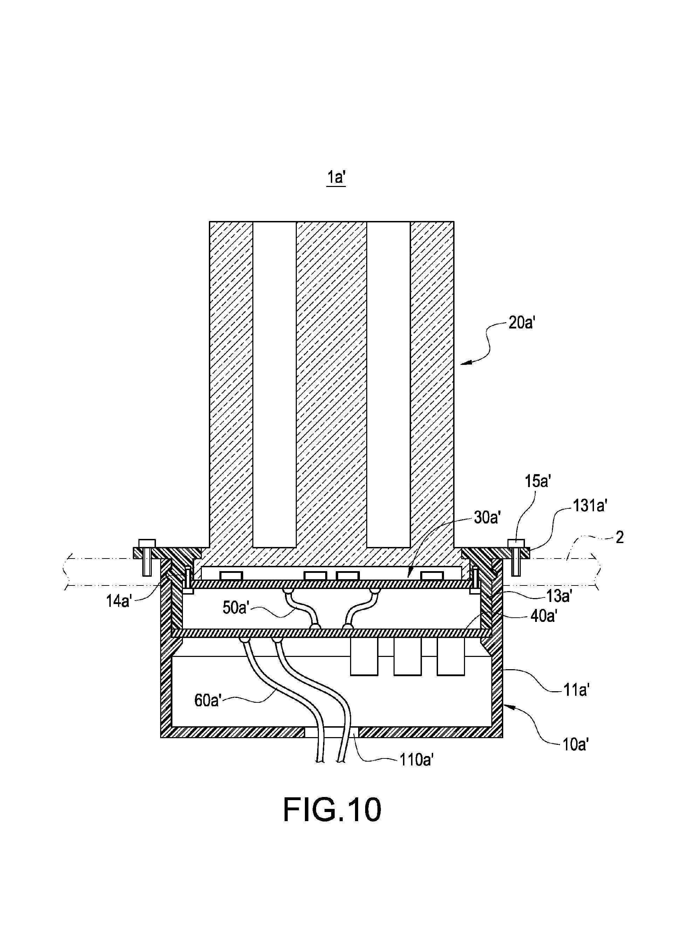

FIG. 10 is a sectional view of a LED decorative lighting according to the second embodiment of the disclosure. Referring to FIG. 10, a LED decorative lighting 1a' of this embodiment comprises a lamp holder 10a', a light guide module 20a', a light module 30a', a circuit board 40a', a pair of connection wires 50a' and a pair of power lines 60a'. In this embodiment, the lamp holder 10a' has a case 11a' comprising a cover 13a' and a plurality of screwing members 14a'.

The case 11a' of this embodiment is square and has an opening 110a, which is different from that of the first embodiment. Furthermore, the cover 13a' has a protruding edge 131a' extending outwardly and protruding from the top edge of the case 11a'. The case 11a' further comprises a plurality of second screwing members 15a'. The second screwing members 15a go through the protruding edge 131a' and lock the LED decorative lighting 1a' onto an object 2 (e.g. a stand or a wall).

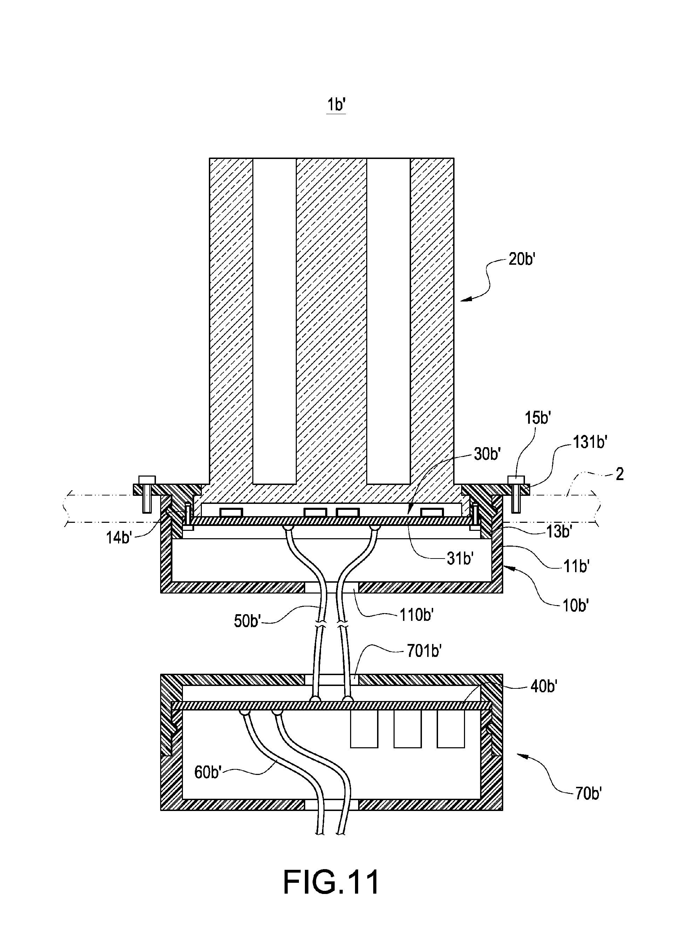

FIG. 11 is a sectional view of a LED decorative lighting according to the third embodiment of the disclosure. Referring to FIG. 11, a LED decorative lighting 1b' of this embodiment comprises a lamp holder 10b', a light guide module 20b', a light module 30b', a circuit board 40b', a pair of connection wires 50b' and a pair of power lines 60b'. In this embodiment, the lamp holder 10b' has a case 11b' comprising a cover 13b', a plurality of screwing members 14b' and a plurality of second screwing members 15b'. Moreover, the cover 13b' has a protruding edge 131b' while the light module 30b' has a LED substrate 31b'.

The LED decorative lighting 1b' of this embodiment further comprises an electrical box 70b', which is different from the previous embodiment. The electrical box 70b' is disposed on a lateral side of the lamp holder 10b, separately while the circuit board 40b' is disposed in the electrical box 70b'. Furthermore, a first opening 110b' is formed on the case 11b' while a second opening 701b' is formed on the electrical box 70b'. One end of the pair of connection wires 50b' is connected to the LED substrate 31b' and goes through the first opening 110b'. The other end extends and goes through the second opening 701b' in order to be electrically connected to the circuit board 40b'.

## Claims

1. A LED decorative lighting, (1, 1a', 1b') comprising:
a lamp holder (10, 10a', 10b') having a case (11, 11a', 11b');
a light guide module (20, 20a', 20b') comprising a stand (21) connected to the case (11, 11a', 11b') and an outer light pipe (22, 22a∼22e) as well as a central light pipe (23, 23a∼23e) which are disposed on the stand (21), wherein the outer light pipe (22, 22a∼22e) is a hollow cylinder and surrounds an inner space (220), and the central light pipe (23, 23a∼23e) is in the inner space (220); and
a light module (30, 30a', 30b') disposed in the case (11, 11a', 11b'), wherein the light module (30, 30a', 30b') comprises a LED substrate (31, 31b') and a plurality of LED chips (32) disposed on the LED substrate (31, 31b'), the LED chips (32) comprise at least one outer LED chip (321) arranged correspondingly to the outer light pipe (22, 22a∼22e) and at least one central LED chip (322, 322a) arranged correspondingly to the central light pipe (23, 23a∼23e).

2. The LED decorative lighting according to claim 1, further comprising a circuit board (40, 40a', 40b'), wherein the circuit board (40, 40a', 40b') is disposed in the case (11, 11a', 11b') and is relative to the LED substrate (31, 31b') while on a lateral side away from the LED substrate (31, 31b'), and the circuit board (40, 40a', 40b') is electrically connected to the LED substrate (31, 31b').

3. The LED decorative lighting according to claim 2, wherein the circuit board (40, 40a', 40b') further comprises a first power component (41), a second power component (42) and a switch component (43) for controlling the first power component (41) and the second power component (42), the first power component (41) is electrically connected to the at least one outer LED chip (321) while the second power component (42) is electrically connected to the at least one central LED chip (322, 322a).

4. The LED decorative lighting according to any of the claims 2 to 3 , further comprising a pair of connection wires (50, 50a', 50b') and a pair of power lines (60, 60a', 60b'), wherein the lamp holder (10, 10a', 10b') further comprises a lamp cap (12) connected to the case (11, 11a', 11b'), two ends of the pair of connection wires (50, 50a', 50b') are connected to the LED substrate (31, 31b') and the circuit board (40, 40a', 40b') respectively, and two ends of the pair of power lines (60, 60a', 60b') are connected to the circuit board (40, 40a', 40b') and the lamp cap (12) respectively.

5. The LED decorative lighting according to any of the claims 1 to 4, further comprising a cover (13, 13a', 13b'), wherein the cover (13, 13a', 13b') surrounds a peripheral edge of the stand (21) and is connected to a top edge of the case (11, 11a', 11b').

6. The LED decorative lighting according to claim 5, further comprising a plurality of screwing members (14, 14a' 14b') respectively going through the LED substrate (31, 31b') and locked onto the cover (13, 13a', 13b').

7. The LED decorative lighting according to any of the claims 1 to 6, wherein the number of the outer LED chips (321) and the number of the central LED chips (322, 322a) are plural, the outer LED chips (321) are disposed on a bottom surface of the outer light pipe (22, 22a∼22e) at intervals, and the central LED chips (322, 322a) are disposed on a bottom surface of the central light pipe (23, 23a∼23e) at intervals.

8. The LED decorative lighting according to any of the claim 5 to 7, wherein the cover (13, 13a', 13b') has a protruding edge (131a', 131b') extending outwardly and protruding from the top edge of the case (11, 11a', 11b').

9. The LED decorative lighting according to claim 8, wherein the case (11, 11a', 11b') comprises a plurality of second screwing members (15a', 15b') going through the protruding edge (131a', 131b') for locking the LED decorative lighting (1, 1a', 1b') on an object (2).

10. The LED decorative lighting according to any of the claims 1 to 9, wherein the outer light pipe (22, 22a∼22e) is an annular stick while the central light pipe (23, 23a∼23e) is a solid circular stick.

11. The LED decorative lighting according to any of the claims 1 to 10, wherein the outer light pipe (22, 22a∼22e) is a hollow triangular stick or a hollow square stick while the central light pipe (23, 23a∼23e) is a solid triangular stick or a solid circular stick.

12. The LED decorative lighting according to any of the claims 1 to 11, wherein the outer light pipe (22, 22a∼22e) is a hollow star stick or a hollow hexagonal stick while the central light pipe (23, 23a∼23e) is a solid star stick or a solid hexagonal stick.

13. The LED decorative lighting according to any of the claims 1 to 12, wherein the outer light pipe (22, 22a∼22e) is a hollow regular polygonal stick while the central light pipe (23, 23a∼23e) is a solid regular polygonal stick.

14. The LED decorative lighting according to any of the claims 1 to 13, further comprising an electrical box (70b') and a circuit board (40, 40a', 40b') disposed inside the electrical box (70b'), and the electrical box (70b') being disposed on a lateral side of the lamp holder (10, 10a', 10b') separately.

15. The LED decorative lighting according to claim 14, further comprising a pair of connection wires (50, 50a', 50b'), wherein a first opening (110b') is formed on the lamp holder (10, 10a', 10b'), a second opening (701b') is formed on the electrical box (70b'), one end of the pair of connection wires (50, 50a', 50b') is connected to the LED substrate (31, 31b') and goes through the first opening (110b') while the other end extends and goes through the second opening (701b') and therefore is electrically connected to the circuit board (40, 40a', 40b').
